Europäisches Patentamt

European Patent Office

Office européen des brevets

(19)

(11) EP 0 750 380 B1

(12) **FASCICULE DE BREVET EUROPEEN**

(45) Date de publication et mention
de la délivrance du brevet:
**04.08.1999 Bulletin 1999/31**

(51) Int Cl.⁶: **H02G 5/06**

(21) Numéro de dépôt: **96401321.3**

(22) Date de dépôt: **18.06.1996**

(54) **Matériel électrique blindé protégé contre les surtensions**

Gekapselte elektrische Geräte, geschützt gegen Überspannungen

Electrical metal-clad switchgear protected against overvoltages

(84) Etats contractants désignés:
**AT CH DE ES FR GB IT LI SE**

(30) Priorité: **22.06.1995 FR 9507497**

(43) Date de publication de la demande:
**27.12.1996 Bulletin 1996/52**

(73) Titulaire: **GEC ALSTHOM T ET D SA**
**75016 Paris (FR)**

(72) Inventeur: **Collet, Michel**
**69003 Lyon (FR)**

(74) Mandataire: **Gosse, Michel et al**
**ALSTOM France SA**
**Service de Propriété Industrielle**
**c/o CEGELEC**
**5, Avenue Newton**
**92142 Clamart Cédex (FR)**

(56) Documents cités:
**DE-A- 3 216 275          FR-A- 2 319 183**
**US-A- 3 829 707          US-A- 4 078 184**

## Description

La présente invention concerne le matériel électrique avec enveloppe métallique à la terre dit matériel "blindé".

Un problème rencontré dans les installations électriques du type précité est celui de lutter contre les surtensions qui surviennent en diverses circonstances, par exemple lors des manoeuvres d'ouverture et de fermeture de l'installation, et en particulier lors de la fermeture à vide d'un transformateur HT/MT (Haute tension/Moyenne tension) . Ces surtensions se manifestent sous forme d'oscillations à front raide qui sont tout à fait dommageables pour l'installation blindée. Ces oscillations, qui se propagent dans l'installation, se réfléchissent aux extrémités et engendrent des ondes stationnaires.

Il a été proposé, pour amortir les oscillations, de relier le conducteur de l'installation blindée à la terre par une liaison comprenant en série un condensteur et une impédance égale à l'impédance caractéristique de la ligne.

Cette mesure est malheureusement inopérante si le point de liaison coïncide avec un noeud du système d'ondes stationnaires indiqué plus haut.

Il a été également proposé, par le document US-A-3 829 707, de revêtir le conducteur sur une partie de sa longueur d'une couche d'un matériau à base de fer ou d'alliage fernickel.

Une telle solution entraîne des pertes importantes lorsque des courants élevés traversent la ligne.

Le document DE-A-32016 275 propose de revêtir le conducteur et l'intérieur de l'enveloppe, sur au moins une partie, d'une couche de faible conductivité électrique et de haute perméabilité magnétique; le matériau envisagé est de la poudre de fer. Là encore, l'inconvénient de la solution est d'engendrer des pertes thermiques élevées.

Le document US-A-4 078 184 propose de disposer entre le conducteur et l'enveloppe des impédances discrètes. Cette solution est de mise en oeuvre onéreuse et inapplicable dans la plupart des installations avec enveloppe métallique à la terre.

Un but de l'invention est de réaliser un matériel blindé dans lequel les ondes de surtension sont bien amorties, pour une large gamme de fréquences, sans créer de pertes thermiques et de mise en oeuvre économique pour toute installation avec enveloppe métallique à la terre.

L'invention a pour objet un matériel blindé comprenant, pour chaque phase, un conducteur à l'intérieur d'une enveloppe métallique à la terre remplie de gaz d'isolement, une portion de l'enveloppe et/ou du conducteur étant revêtue, extérieurement pour le conducteur et intérieurement pour l'enveloppe, d'au moins une couche en matériau radialement résistif, caractérisée en ce que la longueur de la couche est comprise entre 3 et 10 mètres, les épaisseurs et la nature étant choisies pour constituer une résistance radiale égale à l'impédance caractéristique de la ligne.

Eventuellement, le gaz d'isolement au droit de la ou des couches en matériau radalement résistif est remplacé par un matériau solide diélectrique ou isolant de sorte que la capacité entre le conducteur et l'enveloppe ait une valeur comprise entre 0,2 et 5 nF.

L'invention est expliquée maintenant en référence au dessin annexé dans lequel:

- la figure 1 représente schématiquement un tronçon de liaison blindée selon un premier mode de mise en oeuvre de l'invention,
- la figure 2 représente schématiquement un tronçon de liaison blindée selon un second mode de mise en oeuvre de l'invention,
- la figure 3 représente schématiquement un tronçon de liaison blindée selon un troisième mode de mise en oeuvre de l'invention.

On notera que dans les dessins, les proportions ne sont pas respectées pour des raisons évidentes.

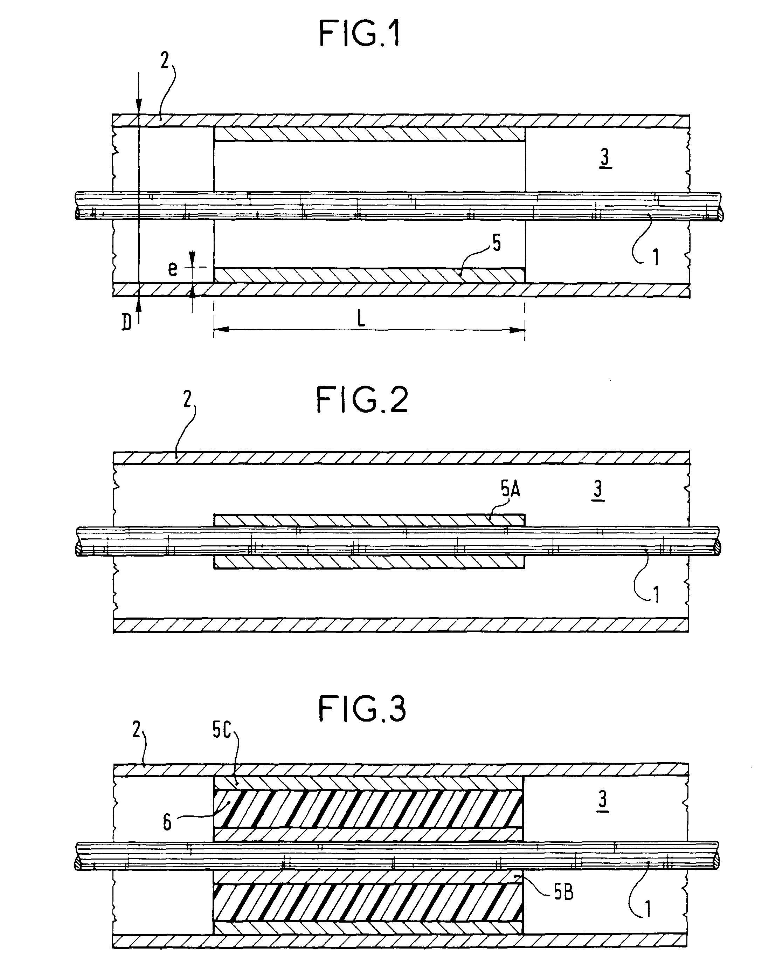

La Fig.1 montre un tronçon de liaison blindée faisant partie d'une installation blindée comme par exemple un poste de distribution à haute tension. Une seule phase de la liaison est représentée dans la Fig. 1, et il faut comprendre que des tronçons similaires des autres phases seront équipés de la même manière.

Ce tronçon comprend un conducteur 1, par exemple en cuivre, disposé axialement à l'intérieur d'une enveloppe métallique 2, par exemple en aluminium, mise à la terre. L'enveloppe, étanche, est remplie de gaz 3 à bonnes propriétés diélectriques, tel que l'hexafluorure de soufre $SF_6$, sous une pression de quelques hectopascals.

Selon l'invention, les oscillations de surtensions sont amorties non pas par une impédance et une capacité discrètes connectées en série entre un point du conducteur et un point de l'enveloppe, mais par des composants répartis sur une longueur importante.

Pour cela, la résistance est constituée, dans l'exemple de la Fig.1, par une couche résistive 5 coaxiale à l'enveloppe et en contact avec cette dernière. Le matériau de cette couche est par exemple à base de carbone. La longueur de cette couche est par exemple de 5 mètres, mais plus généralement, elle pourra être comprise entre 3 et 10 mètres. L'épaisseur de la couche est choisie pour que la résistance radiale soit égale à l'impédance caractéristique Zc de l'installation blindée.

Le calcul de l'épaisseur est aisé:

si $\rho$ désigne la résistivité radiale du matériau de la couche 5, e son épaisseur, D le diamètre intérieur de l'enveloppe supposée cylindrique et L la longueur de la couche, l'épaisseur e est donnée par la relation approchée:

$$e = \pi.L.D.Zc / \rho$$

La couche 5 peut être réalisée sous forme d'un manchon pré-usiné introduit à l'intérieur de l'enveloppe blindée au moment de la construction de l'installation. En variante, la couche résistive 5 peut être constituée par une couche de vernis isolant contenant des additifs conducteurs. Dans une autre variante, la couche résistive 5 peut être réalisée par dépôt.

La connexion électrique entre le conducteur 1 et la résistance de valeur Zc est constituée par le condensateur dont les armatures sont le conducteur 1 et la couche 5, et dont le diélectrique est constitué par le gaz d'isolement de l'installation, dans le cas présent, par le SF6.

La valeur de la constante diélectrique du SF6 est suffisante pour obtenir généralement la valeur souhaitée de capacité, qui est comprise entre 0,2 et 5 nF.

Les valeurs indiquées plus haut de la résistance et de la capacité permettent d'amortir les oscillations dans une large gamme de fréquences, pour la plupart des installations blindées construites présentement.

Dans la variante représentée dans la Fig. 2, la résistance égale à l'impédance caractéristique de la ligne est disposée non plus contre l'enveloppe 2, mais autour du conducteur 1. Elle est référencée 5A.

Dans la Fig. 3, la résistance est constituée de deux parties, l'une 5B autour du conducteur, l'autre 5C contre l'enveloppe.

On notera que la valeur de la capacité entre le conducteur 1 et l'enveloppe 2 peut être ajustée en disposant dans l'espace compris entre la couche 5B et la couche 5C, un matériau diélectrique ou isolant 6, comme le montre la Fig. 3. Dans le mode de réalisation de la Fig. 2, le matériau isolant 6 remplirait le volume compris entre la couche 5A et l'enveloppe métallique 3. Dans le mode de réalisation de la Fig. 3, le matériau 6 remplirait l'espace entre la couche 5 et le conducteur 1. En d'autres termes, le gaz au droit de la ou des couches résistives 5, 5A, 5B-5C est remplacé par un matériau diélectrique ou isolant.

Les couches ou matériaux précitées pourront être avantageusement placées dans les jeux de barres d'un poste ou dans les traversées d'entrée des transformateurs.

## Revendications

1. Matériel blindé comprenant, pour chaque phase, un conducteur (1) à l'intérieur d'une enveloppe métallique (2) à la terre remplie de gaz d'isolement (3), une portion de l'enveloppe et/ou du conducteur étant revêtue, extérieurement pour le conducteur et intérieurement pour l'enveloppe, d'au moins une couche (5, 5A, 5B, 5C) en matériau radialement résistif, caractérisée en ce que la longueur (L) de la couche est comprise entre 3 et 10 mètres, les épaisseurs et la nature étant choisies pour constituer une résistance radiale égale à l'impédance caractéristique (Zc) de la ligne.

2. Matériel blindé selon la revendication 1, caractérisé en ce que le gaz d'isolement au droit de la ou des couches (5, 5A, 5B, 5C) en matériau radialement résistif est remplacé par un matériau solide (6) diélectrique ou isolant de sorte queiné la capacité entre le conducteur (1) et l'enveloppe (2) ait une valeur comprise entre 0,2 et 5 nF.

## Patentansprüche

1. Abgeschirmtes Material, das für jede Phase einen Leiter (1) im Inneren einer geerdeten metallischen Umhüllung (2) umfasst, die mit einem Isoliergas (3) gefüllt ist, wobei ein Abschnitt der Umhüllung und/ oder des Leiters - außerhalb im Falle des Leiters und innerhalb im Falle der Umhüllung - mit wenigstens einer Schicht (5, 5A, 5B, 5C) aus radial resistivem Material beschichtet ist, **dadurch gekennzeichnet,** dass die Länge (L) der Schicht zwischen 3 und 10 m beträgt, wobei die Dicke und die Beschaffenheit gewählt sind, um einen radialen Widerstand gleich der charakteristischen Impedanz (Zc) dieser Leitung zu bilden.

2. Abgeschirmtes Material nach Anspruch 1, dadurch gekennzeichnet, dass das Isoliergas am Ort der Schicht oder Schichten (5, 5A, 5B, 5C) aus radial resistivem Material so durch ein dielektrisches oder isolierendes festes Material (6) ersetzt ist, dass die Kapazität zwischen dem Leiter (1) und der Umhüllung (2) einen Wert zwischen 0,2 und 5 nF hat.

## Claims

1. Metal-clad equipment comprising, for each phase, a conductor (1) inside grounded metal cladding (2) filled with an insulation gas (3), a portion of the inside of the cladding and/or of the outside of the conductor being coated with at least one layer (5, 5A, 5B, 5C) of a radially resistive material, said equipment being characterized in that the length (L) of the layer lies in the range 3 meters to 10 meters, the thickness and type of which being chosen to constitute radial resistance equal to the characteristic impedance (Zc) of the line.

2. Metal-clad equipment according to claim 1, characterized in that the insulation gas facing the layer(s) (5, 5A, 5B, 5C) of radially resistive material is replaced with a solid dielectric or insulating material (6) so that the capacitance between the conductor (1) and the cladding (2) has a value lying in the range 0.2 nF to 5 nF.

# FIG.1

# FIG.2

# FIG.3